# FASCICULE DE BREVET EUROPEEN

(11) **EP 1 406 319 B1**
(45) Date de publication et mention de la délivrance du brevet: **23.07.2008**
(21) Numéro de dépôt: 03292446.6
(22) Date de dépôt: 03.10.2003
(51) Int. Cl.: H01L 41/09

(54) **Dispositif de commande de valves**
Ventilbetätigung
Valve actuator

(30) Priorité: 03.10.2002 FR 0212230
(43) Date de publication de la demande: 07.04.2004
(73) Titulaire: Sagem Défense Sécurité, 75015 Paris (FR)
(72) Inventeur: Audren, Jean Thierry, 78470 St Remy les Chevreuse (FR); Merlet, Etienne, 78180 Montigny-le-Bretonneux (FR); Meleard, Jérôme, 91081 Courcouronnes (FR); Mangeot, Charles, 92160 Antony (FR)
(74) Mandataire: Le Forestier, Eric

(56) Documents cités:
- WO-A-03/009402
- DE-A- 10 060 018
- US-A1- 2001 004 181
- US-B1- 6 246 552

## Description

### DOMAINE TECHNIQUE GENERAL.

La presente invention concerne les dispositifs de commande de valves ou de tiroirs hydrauliques, notamment dans des circuits hydrauliques, par exemple dans le domaine aéronautique ou automobile.

Plus précisément, elle concerne notamment les dispositifs de commande de valves des circuits hydrauliques permettant une course progressive de la valve, et une grande sécurité d'utilisation sur une grande plage de températures.

### ETAT DE L'ART.

On connaît déjà dans l'état de la technique des dispositifs de commande de valves dans des circuits hydrauliques.

Ces dispositifs de commande sont utilisés dans de nombreux systèmes, comme par exemple des servocommandes de freins, ou des actionneurs de commandes de vol dans le domaine aéronautique.

Certains des dispositifs de l'état de la technique ont pour but de régler à un niveau voulu le débit hydraulique du circuit.

Généralement, le débit hydraulique est commandé par le déplacement d'un pointeau disposé dans un orifice, la position du pointeau dans l'orifice ainsi que son déplacement permettant de réguler le débit du liquide.

Les systèmes de commande les plus utilisés aujourd'hui sont électromagnétiques, Ils ont un volume important et une consommation énergétique élevée.

Certains systèmes de commande de valves utilisent des actionneurs piézo-électriques pour déplacer le pointeau.

Cependant, ces dispositifs ne donnent pas tout à fait satisfaction.

En effet, le déplacement du pointeau se fait dans l'axe d'élongation du matériau piézo-électrique. Dans de type de montage, la variation de volume du matériau piézo-électrique en fonction de la température provoque une instabilité de la position du pointeau lorsque la température varie sur une grande plage de valeurs. De plus, la plupart des systèmes comportant un tel dispositif piézoélectrique présentent un déplacement du zéro de fonctionnement supérieur à la plage d'utilisation.

WO 03/009402 divulgue un dispositif de déplacement permettant la combinaison de mouvements linéaires et rotatifs

US 6 246 552 B1 divulgue un dispositif conforme au préambule de la revendication 1.

### PRESENTATION DE L'INVENTION.

L'invention propose de pallier ces inconvénients.

Un but de l'invention est de proposer un dispositif qui présente une grande stabilité sur une grande plage de températures, typiquement de -55°C à +80°C.

Un autre but de l'invention est de proposer un système permettant l'actionnement de valves avec une force typiquement égale à 50 N, sur une amplitude de déplacement typiquement de ±0.5 mm.

Enfin, un but de l'invention est de proposer un dispositif de commande de valves compact.

A cet effet, l'invention propose un dispositif de déplacement d'une pièce mobile selon la revendication 1.

L'invention est avantageusement complétée par les caractéristiques suivantes, prises seules ou en une quelconque de leur combinaison techniquement possible :
- des poussoirs obliques sont venus de matière sur ladite plaque.
- chaque structure comporte des rétrécissements de section entre la plaque et les poussoirs obliques, ainsi qu'entre les poussoirs obliques et les pavés de jonction avec la pièce mobile, ces rétrécissements de section étant aptes à fournir une flexibilité à chaque structure;
- la liaison entre les poussoirs et le pavé de jonction étant une articulation élastique sans jeu formée d'au moins une lame de liaison ;
- le dispositif comporte des moyens aptes à précontraindre les moyens de déplacement entre les plaques ;
- un pavé de jonction est relié à la pièce mobile et un autre pavé de jonction est fixe par rapport au boîtier externe aux structures, le pavé fixe étant solidaire d'une tige venant en butée d'une vis de réglage de la position zéro de déplacement de la pièce mobile ;
- le dispositif comporte au moins une membrane de part et d'autre des pavés de jonction, les membranes étant souples dans la direction de déplacement de la pièce mobile et raides dans la direction transverse ;
- des membranes sont aptes à assurer une étanchéité entre la pièce mobile et le boîtier ;
- le boîtier est rempli d'un liquide de contre-pression ;
- au moins une membrane comporte des soufflets ;
- le dispositif comporte au moins une chambre de dilatation pour le liquide de remplissage ; et
- chaque chambre de dilatation comporte une découpe d'une partie des parois du boîtier, cette découpe étant reliée au boîtier par des soufflets.

### PRESENTATION DES FIGURES.

D'autres caractéristiques, buts et avantages de l'invention ressortiront de la description qui suit, qui est purement illustrative et non limitative, et qui doit être lue en regard des dessins annexés sur lesquels :
- la figure 1 représente schématiquement une vue en perspective d'un mode de réalisation possible d'un dispositif de commande de valves selon l'invention ;
- la figure 2 représente schématiquement une coupe longitudinale d'un mode de réalisation possible d'un dispositif de déplacement de valves ;
- la figure 3 représente schématiquement une coupe longitudinale d'un dispositif de commande de valves comportant un liquide de remplissage à l'intérieur de son boîtier, ce dispositif comportant des moyens permettant la dilatation thermique du liquide de remplissage;
- la figure 4a représente schématiquement une vue en perspective d'un premier mode de réalisation possible d'une structure d'actionnement de la pièce mobile ;
- la figure 4b représente schématiquement une vue en perspective d'un deuxième mode de réalisation possible d'une structure d'actionnement de la pièce mobile ;
- la figure 5 représente schématiquement une coupe longitudinale d'un mode de réalisation possible d'un dispositif de déplacement de valves, ce dispositif étant apte à être placé à l'intérieur du dispositif représenté à la figure 1 ;
- les figures 6a et 6b représentent schématiquement un mode de réalisation d'une membrane fixée sur un dispositif selon la figure 5 ; et
- les figures 7a à 7c représentent différents états de fonctionnement d'un dispositif selon la figure 5.

### DESCRIPTION DETAILLEE.

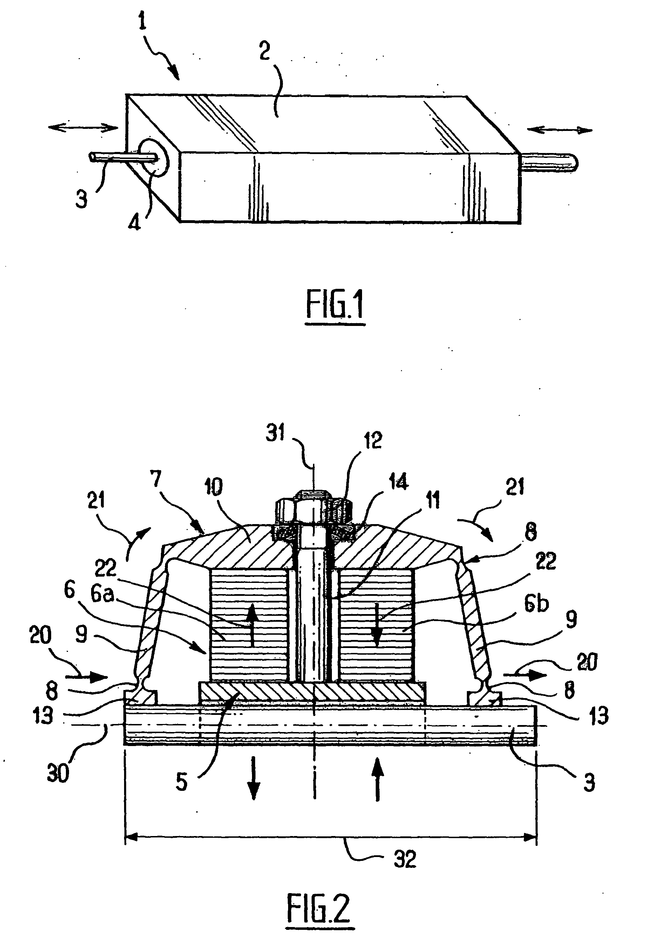

La figure 1 représente schématiquement un mode de réalisation possible d'un dispositif 1 de commande de valves comportant un boîtier externe 2 dans lequel est disposée une tige 3 selon un axe sensiblement longitudinal au boîtier 2.

Le boîtier 2 peut avoir une forme quelconque, mais est préférentiellement de forme parallélépipédique.

La tige 3 est mobile en translation selon l'axe longitudinal du boîtier 2. Au moins une de ses extrémités est reliée à une valve comprise dans un circuit hydraulique. Les doubles flèches visibles à la figure 1 représentent le déplacement de la tige 3 par rapport au boîtier 2.

L'étanchéité entre le boîtier 2 et la tige 3 est assurée par des moyens 4 aptes à solidariser la tige 3 et le boîtier 2 en vue de garantir l'étanchéité, tout en assurant la liberté de déplacement de la tige 3 par rapport au boîtier 2. Les moyens d'étanchéité comportent par exemple une membrane 4 entourant étroitement la tige 3 et reliée d'autre part au boîtier 2. La membrane 4 est souple et permet le déplacement longitudinal de la tige 3 dans le boîtier 2.

L'écoulement du fluide lors de l'ouverture ou la fermeture plus ou moins importante de la valve s'effectue par exemple autour du boîtier 2.

Des moyens d'actionnement de la tige 3 sont compris dans le boîtier 2.

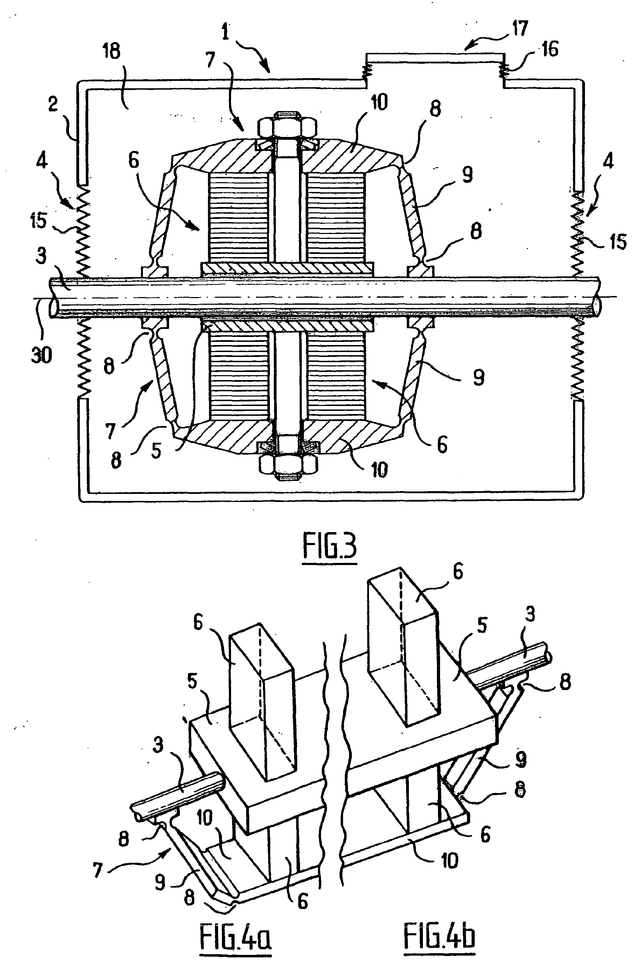

La figure 2 représente schématiquement des moyens d'actionnement de la tige 3. Les moyens d'actionnement comportent une symétrie par rapport au plan 30 passant par l'axe longitudinal de la tige 3. Par conséquent, on n'a représenté sur cette figure que la moitié supérieure, par rapport au plan 30, des moyens d'actionnement. La figure 3 montre l'ensemble du système selon une coupe longitudinale. Les figures 4a et 4b montrent une partie du système d'actionnement selon une vue en perspective.

En référence aux figures 2 à 4b, les moyens d'actionnement comportent des moyens 5 de coulissement longitudinal de la tige 3. Les moyens 5 comportent par exemple une pièce sensiblement en forme de plaque épaisse parallélépipédique 5 percée d'un trou et entourant la tige 3.

La tige 3 peut indifféremment avoir une symétrie de révolution ou une section carrée.

Les moyens 5 sont fixes par rapport au boîtier 2, et sont fixés à ses parois internes. On fixe par exemple la pièce 5 par rapport à la paroi intérieure du boîtier 2 par un de ses côtés parallèle à !'axe de la tige 3.

Des moyens de déplacement la tige 3 permettent de la faire coulisser dans les moyens 5.

Sur la représentation schématique de la figure 2, les moyens de déplacement comportent des moyens 6 de déformation d'une structure 7 solidaire de la tige 3. Bien entendu, le dispositif 1 comporte deux structures 7, s'étendant de part et d'autre du plan 30.

Sur la figure 2, la structure 7 supérieure forme sensiblement un portique entourant la partie centrale de la tige 3, les extrémités de la tige 3 sortant de la structure 7 et du boîtier 2 pour actionner les valves.

La structure 7 comporte une plaque supérieure 10 s'étendant, en position repos, sensiblement parallèlement aux et à distance des axes de la tige 3 et de la pièce 5. La plaque supérieure 10 possède sensiblement une forme parallélépipédique s'étendant sensiblement parallèlement à la surface supérieure de la pièce 5. Pour plus de clarté, cette plaque supérieure 10 n'a pas été reportée sur les figures 4a et 4b.

La structure 7 comporte également des poussoirs latéraux 9 venus de matière sur la plaque supérieure 10 et s'étendant obliquement vers la tige 3. Les extrémités 13 des poussoirs 9 sont rendues solidaires de la tige 3, et forment par exemple des pavés de raccordement. Les figures 4a et 4b représentent deux modes de réalisation possibles des poussoirs 9. Sur la figure 4a, la section droite des poussoirs rétrécit de la plaque 10 vers les pavés 13. Sur la figure 4b, la section droite des poussoirs 9 est constante et de forme carrée. Encore d'autres modes de réalisation sont possibles. Par exemple, la dimension selon un axe perpendiculaire aux figures 2 et 3 de la plaque 10 et des poussoirs 9 peuvent être la même. Le dimensionnement dépend de la section de la tige 3.

La structure 7 comporte des rétrécissements de section 8 aux jonctions entre la plaque supérieure 10 et les poussoirs obliques 9, ainsi qu'entre les poussoirs obliques 9 et les pavés 13. Les rétrécissements de section 8 forment ainsi des endroits de grande flexibilité de la pièce 7, et forment ainsi des moyens du type charnière.

Les moyens de déformation 6 déforment la structure 7, qui déplace à son tour la tige 3 dans les moyens 5.

En référence à la figure 2, les moyens 6 comportent des pavés en matériaux actifs 6a et 6b reliés d'une part à la surface externe des moyens 5, et d'autre part à la face interne de la plaque supérieure 10 de la structure 7. Les pavés 6a et 6b possèdent indifféremment une section radiale à symétrie de révolution ou carrée. Leurs extrémités s'appuient sur deux parois planes. La première surface plane est la paroi inférieure de la plaque supérieure 10. La deuxième surface plane est la paroi supérieure des moyens 5.

Des moyens de précontrainte 11 permettent de précontraindre les moyens de déformation 6 entre les pièces 5 et 7. Par exemple, les moyens de précontrainte comportent une tige 11 filetée coopérant avec un écrou 12 et une rondelle 14. L'écrou 12 appuie la rondelle 14 sur la face externe de la plaque supérieure 10, afin de précontraindre les pièces 7, 6 et 5 ensemble.

Les matériaux actifs 6a et 6b peuvent être du type électro-strictifs, magnéto-strictifs ou piézoélectriques. Ils sont avantageusement en matériaux piézoélectriques.

On va maintenant décrire le mécanisme de déformation de la structure 7 et du déplacement de la tige 3.

La direction d'élongation des matériaux actifs 6a et 6b est normale aux axes de la tige 3 et de la pièce creuse 5. De même, la direction d'élongation des matériaux actifs 6a et 6b est normale à la plaque supérieure 10 de la structure 7.

Sur la figure 2, les flèches 22 montrent les sens d'élongation des matériaux actifs 6a et 6b lors d'une première phase d'alimentation électrique.

Les flèches 22 montrent ainsi que lors d'une première phase d'alimentation, le matériau actif 6a est allongé positivement, tandis que lors de cette même phase, le matériau actif 6b n'est pas allongé ou subit une élongation négative.

Cette différence d'élongation entraîne un pivotement de la plaque supérieure 10 selon un sens indiqué par les flèches 21. Ce pivotement est rendu possible par la flexibilité de la structure 7 grâce aux charnières 8.

Le pivotement de la plaque supérieure 10 entraîne à son tour un déplacement des poussoirs obliques 9.

Comme les extrémités 13 des poussoirs obliques 9 sont solidaires de la tige 3, une élongation positive du matériau 6a entraîne un déplacement de la tige 3 selon le sens indiqué par la flèche 20.

On actionne alors en bout de tige 3 le déplacement d'une valve d'un circuit hydraulique.

On comprend également qu'il est possible d'inverser le sens d'alimentation des matériaux actifs 6a, 6b. On peut alors avoir une élongation positive du matériau 6b, et une élongation négative du matériel 6a. On comprend alors que le pivotement de la plaque supérieure 10 s'effectuera selon un sens inverse par rapport aux flèches 21, et le déplacement de la tige 3 s'effectuera dans un sens opposé à celui indiqué par la flèche 20.

Le déplacement de la valve en extrémité de la tige 3 sera donc inversé par rapport à la première phase d'alimentation et le débit hydraulique sera donc modulé.

Le déplacement de la tige 3 est facilement modulé par l'amplitude d'élongation des matériaux 6a et 6b, ce qui permet d'avoir une modulation précise du débit hydraulique dans le circuit.

Avantageusement, les matériaux actifs 6a et 6b et les tensions d'alimentation des différentes phases permettent une course de la tige 3 avec une amplitude de ±0.5 mm.

Avantageusement la force exercée en bout de tige 3 est égale à 50 N.

Le fait que les sens d'élongation des matériaux actifs 6a et 6b soient antisymétriques par rapport à un axe 31 longitudinal à la tige 11 permet d'obtenir une compensation automatique de la position neutre ou d'équilibre. Cette compensation a lieu quelle que soit la température.

En effet, pour une tension électrique d'alimentation nulle, la tige 3 revient naturellement dans une position centrale stable. On a donc grâce à ce système une bonne stabilité de la position neutre.

La structure 7 déformable permet une grande amplification des élongations des matériaux actifs 6a et 6b.

On rappelle que le boîtier 2 est placé dans un circuit hydraulique. Les pressions statiques du liquide entourant le boîtier 2 peuvent être très importantes. Par conséquent, le fonctionnement de la membrane 4 peut être affecté si rien à l'intérieur du boîtier 2 ne vient faire contre-pression.

Ainsi, pour contrer les pressions statiques importantes du liquide entourant le boîtier 2, la figure 3 montre que, selon une variante du mode de réalisation de la figure 2, on remplit avantageusement l'intérieur du boîtier 2 par un liquide de contre-pression 18, ce liquide étant non agressif pour les moyens d'actionnement de la tige 3.

Dans le cas où l'intérieur du boîtier 2 est rempli d'un liquide 18, et pour tenir compte de la dilatation thermique plus importante du liquide 18 de remplissage par rapport aux parois du boîtier 2, la figure 3 montre que l'on prévoit des soufflets 15 au niveau d'au moins une membrane 4 afin de permettre la dilatation du liquide de remplissage.

Selon une variante, on prévoit au moins une chambre de dilatation pour le liquide de remplissage 18. La chambre de dilatation comporte par exemple une découpe 17 d'une partie des parois du boîtier 2, cette découpe étant reliée au boîtier 2 par des soufflets 16. La dilatation thermique du liquide de remplissage 18 est ainsi permise par le déplacement de la partie 17.

Les soufflets 15 des membranes 4 sont associés ou non à une ou plusieurs chambre(s) de dilatation.

### MODE DE REALISATION.

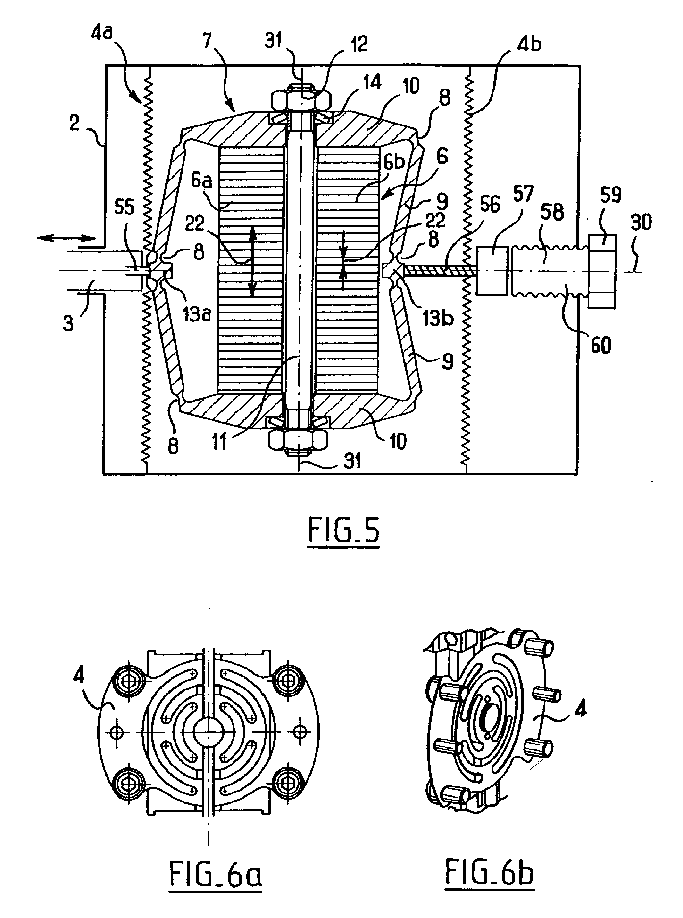

La figure 5 représente schématiquement un mode de réalisation possible des moyens d'actionnement de la tige 3 selon l'invention.

Sur cette figure, les éléments similaires à ceux des figures 2 à 4b portent des références numériques identiques.

Comme pour le premier mode de réalisation, les moyens d'actionnement comportent une symétrie par rapport au plan 30 passant par l'axe longitudinal de la tige 3.

Cependant, selon le deuxième mode de réalisation, la tige 3 d'actionnement n'est plus disposée dans le boîtier externe 2, et le boîtier 2 ne comporte plus de moyens de coulissement internes. Une des extrémités de la tige 3 est située sur la gauche du dispositif de la figure 5.

Comme le montre la figure 5, les moyens de déplacement comportent des moyens 6 de déformation de deux structures 7, s'étendant de part et d'autre du plan 30 et perpendiculairement à des plaques 10 des structures 7, c'est-à-dire sensiblement parallèlement à un élément de précontrainte 11 décrit plus en détails dans la suite de la présente description.

Les moyens 6 comportent au moins deux pavés en matériaux actifs 6a et 6b. Chaque pavé 6a ou 6b peut comporter deux pavés empilés les uns sur les autres

Les matériaux actifs 6a et 6b peuvent être du type électro-strictifs, magnéto-strictifs ou piézoélectriques. Ils sont avantageusement en matériaux piézoélectriques. Les pavés 6a et 6b sont polarisés dans le sens de la plus grande dimension.

Chaque structure 7 comporte une plaque supérieure 10 s'étendant, en position repos, sensiblement parallèlement et à distance du plan 30. Chaque structure 7 comporte également des poussoirs latéraux 9 venus de matière sur la plaque supérieure 10 et s'étendant obliquement vers le plan 30.

Les poussoirs 9 peuvent également être rapportés sur les plaques 10 par l'intermédiaire d'au moins une lame flexible, métallique ou construite dans un autre matériau qu'un métal, la lame faisant la liaison élastique entre les poussoirs 9 et chaque plaque 10.

Les poussoirs 9 sont géométriquement antisymétriques par rapport à un plan longitudinal 31 passant par les moyens de précontrainte 11, le plan 31 étant perpendiculaire au plan de la figure 5 et aux plaques 10. Ils s'étendent ainsi, en partant des plaques 10 vers la tige 3, de la droite vers la gauche du dispositif sur la figure 5.

Comme dans le premier mode de réalisation, les moyens de précontrainte comportent préférentiellement une tige 11 filetée coopérant avec un écrou 12 et une rondelle 14. L'écrou 12 appuie la rondelle 14 sur la face externe de la plaque supérieure 10, afin de précontraindre les pièces 7 et 6 ensemble. La compression des pavés 6a et 6b évite leur dégradation. Cependant, les moyens de précontrainte sont assez souples pour ne pas gêner le mouvement des plaques 10.

Les structures 7, symétriques l'une par rapport à l'autre, sont rendues solidaires l'une par rapport à l'autre grâce à des pavés 13 situés à une des extrémités des poussoirs 9.

En effet, les poussoirs 9 sont rendus solidaires les uns des autres pour former des pavés 13 de jonction.

Du fait de la symétrie par rapport au plan 30 et de l'antisymétrie géométrique par rapport au plan 31, chaque couple de poussoirs 9 forme un angle dont l'ouverture est dans le même sens - vers la droite sur la figure 5 - mais dont la valeur peut être différente selon le couple, comme décrit dans la suite de la présente description.

Chaque structure 7 comporte des rétrécissements de section 8 aux jonctions entre la plaque supérieure 10 et les poussoirs obliques 9, ainsi qu'entre les poussoirs obliques 9 et les pavés 13. Les rétrécissements de section 8 forment ainsi des endroits de grande flexibilité de la structure 7, et forment ainsi des moyens du type charnière.

Dans le cas où les poussoirs 9 sont rapportés sur la plaque 10, la charnière 8 est formée par la lame de liaison entre le poussoir 9 et la plaque 10.

On peut également prévoir de relier les poussoirs 9 aux pavés de jonction 13 grâce à au moins une lame flexible, métallique ou construite dans un autre matériau qu'un métal, la lame faisant la liaison élastique entre les poussoirs 9 et chaque pavé 13.

On comprend alors que les lames flexibles jouent le même rôle que des rétrécissements de section dans les poussoirs 9, et forment des articulations sans jeu élastiques qui donnent une flexibilité à chaque structure 7.

Les pavés de raccordement 13 sont tous deux reliés à des moyens de liaisons vers d'autres pièces mécaniques qui traversent les membranes 4 situées à droite et à gauche des structures 7.

Le pavé 13a est mobile longitudinalement dans le plan 30 et est relié à une tige de raccordement 55 qui traverse la membrane 4a. La tige 55 est elle-même reliée à la tige 3 de commande de la valve.

Le pavé 13b est fixe par rapport au boîtier 2 lors de l'utilisation du dispositif. Il est relié à une tige 56 située dans l'axe de la tige 55 et dans l'axe de la tige 3 dans le plan 30. La tige 56 traverse la membrane 4b.

La tige 56 comporte à son extrémité opposée au pavé 13b une tête 57. La tête 57 vient en butée contre l'extrémité d'une tige filetée 58 d'une vis 60. La tête 59 de la vis 60 est située à l'extérieur du boîtier 2. La vis 60 permet la mise en place du zéro du déplacement de la tige 3. Cette mise à zéro du déplacement de la tige s'effectue par un déplacement des structures 7 en translation parallèlement au plan 30. Les structures 7 sont flottantes dans le boîtier 2, mais sont reliées à l'intérieur du boîtier 2 par l'intermédiaire des membranes 4 permettant une translation des structures 7 parallèlement au plan 30.

On comprend alors que lorsque la position du zéro est fixée, le pavé 13b est fixe par rapport au boîtier 2. En effet, la vis 60 est d'une part fixe par rapport au boîtier du fait du taraudage, et d'autre part, la tige 56 et la tête 57, toutes deux solidaires du pavé 13b, viennent en butée sur l'extrémité de la vis 60.

Les membranes 4 sont souples dans la direction de déplacement de la tige 3 et raides dans la direction transverse. Les structures 7 ne se déplacent donc pas dans le sens transverse.

La membrane 4a permet ainsi le déplacement de la tige 55 et par conséquent de la tige 3. La membrane 4a et la membrane 4b permettent un déplacement en translation des structures 7 pour la mise à zéro du système.

Les figures 6a et 6b montrent schématiquement des modes de réalisation possibles de membranes 4 selon l'invention. On constate sur ces figures que les membranes 4 n'assurent pas forcément l'étanchéité au dispositif.

L'étanchéité peut en effet être fournie par ailleurs par d'autres dispositifs extérieurs au boîtier 2.

De plus, l'étanchéité n'est pas nécessaire dans toutes les applications du dispositif selon l'invention.

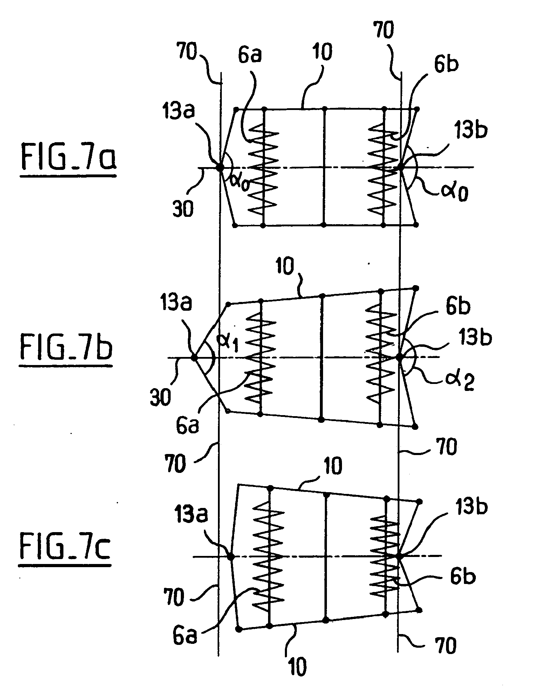

On va maintenant décrire le mécanisme de déformation de la structure 7 et du déplacement de la tige 3 dans un dispositif selon le deuxième mode de réalisation, en référence à la figure 5 et aux figures 7a à 7c.

La figure 5 montre que la direction d'élongation des matériaux actifs 6a et 6b est normale aux axes de la tige 3 et des plaques 10 des structures 7.

Les figures 7a à 7c montrent ainsi trois états différents d'extension des pavés 6a et 6b, et par conséquent trois états différents de la tige 3.

La figure 7a montre l'état initial ou position au repos du dispositif. Les pavés 6a et 6b ne sont pas alimentés électriquement. Les deux plaques 10 sont donc parallèles entre elles, et parallèles au plan 30.

La tige 3 est donc dans la position zéro, dont on rappelle qu'on peut fixer la position grâce à la vis 60 qui permet de translater les structures 7 grâce à la souplesse selon le sens longitudinal des membranes 4a et 4b.

On référence par *α*₀ l'angle initial que font entre eux les poussoirs 9 de deux structures 7. La distance initiale entre les pavés 13a et 13b est repérée par les lignes 70.

La figure 7b montre que l'application de champs électriques égaux mais opposés en signe sur les deux groupes de pavés 6a et 6b va entraîner une inclinaison des plaques 10. Les deux plaques 10 restent symétriques entre elles par rapport au plan 30.

L'inclinaison des plaques 10 a pour conséquence une variation des angles des poussoirs 9 entre eux.

Le couple de poussoirs 9 reliés au pavé 13a forme un angle α₁ et le couple de poussoirs 9 reliés au pavé 13b forme un angle α₂. Les angles entre les poussoirs évoluent en opposition, c'est-à-dire que si α₁ diminue α₂ augmente et réciproquement, mais les deux angles α₁ et α₂ évoluent d'une valeur différente.

Comme le pavé 13b est fixe par rapport au boîtier 2, la variation d'angle entre les poussoirs va avoir pour conséquence une variation de la distance entre les pavés 13a et 13b. On voit donc que le pavé 13a est avancé par rapport à sa position initiale repérée par la ligne 70. La tige 3 va donc être déplacée vers la gauche sur la figure 7b. On rappelle que le déplacement du pavé 13a est dû à l'inclinaison des plaques 10 sous l'action des pavés 6a et 6b.

Sur la figure 5, les flèches 22 montrent les sens d'élongation des matériaux actifs 6a et 6b lors d'une autre phase d'alimentation électrique, également représentée sur la figure 7c. L'alimentation est opposée à celle de la figure 7b. Les plaques 10 vont donc être inclinées dans un autre sens, et le pavé 13a va être déplacé vers la droite sur la figure 7c.

L'évolution de la distance de déplacement du pavé 13a en fonction de l'alimentation électrique peut être approchée par une relation géométrique entre les trois angles α₀, α₁ et α₂. Elle est également influencée par les déformations élastiques engendrées au niveau de la structure lors de l'application d'une force extérieure.

La tige 3 est mobile en translation selon l'axe longitudinal du boîtier 2. Au moins une de ses extrémités est reliée à une valve comprise dans un circuit hydraulique. On peut ainsi par exemple régler la pression, le débit d'un fluide hydraulique grâce au déplacement de la tige.

Le dispositif peut par exemple être utilisé dans les servocommandes de freins ou dans les actionneurs de commande de vol.

Avantageusement, les matériaux actifs 6a et 6b et les tensions d'alimentation des différentes phases permettent une course de la tige 3 avec une amplitude de ±0.5 mm.

Avantageusement la force générée par le système et exercée en bout de tige 3 est égale ou supérieure à 50 N.

Comme pour le premier mode de réalisation, le fait que les sens d'élongation des matériaux actifs 6a et 6b soient antisymétriques par rapport à un axe 31 longitudinal à la tige 11 permet d'obtenir une compensation automatique de la position neutre ou d'équilibre. Cette compensation a lieu quelle que soit la température.

En effet, pour une tension électrique d'alimentation nulle, la tige 3 revient naturellement dans une position centrale stable. On a donc, grâce à ce système, une bonne stabilité de la position neutre.

La structure 7 déformable permet une grande amplification des élongations des matériaux actifs 6a et 6b.

De plus, dans le deuxième mode de réalisation, l'inclinaison d'un des couples de poussoirs 9 est inversée par rapport à celle du premier mode de réalisation.

En outre, les déplacements des deux pavés 13a et 13b sont découplés du fait que la tige 3 ne passe plus au centre des structures 7 et que les pavés 13a et 13b ne sont plus tous les deux liés à la tige 3.

Ces deux caractéristiques présentent deux avantages principaux.

Premièrement, les déformations aux extrémités s'additionnent de telle sorte que le déplacement résultant est plus important.

Deuxièmement, les efforts internes du dispositif sont moins importants.

En outre, le fait que le réglage du zéro s'effectue simplement grâce à une vis agissant sur les moyens de déplacement au travers d'un taraudage du boîtier est également un autre avantage par rapport au dispositif du premier mode de réalisation.

Le deuxième mode de réalisation présente un encombrement plus réduit ainsi qu'une diminution du nombre d'interfaces en série avec les matériaux actifs, ce qui minimise les pertes dans les raideurs d'interfaces. On augmente ainsi la précision de déplacement de la tige 3.

On peut également augmenter la section des matériaux actifs, ce qui permet d'augmenter la raideur du dispositif.

Le deuxième mode de réalisation peut bien entendu comporter un liquide de contre pression et des soufflets de dilatation comme dans le premier mode de réalisation.

Le premier mode de réalisation peut également comporter des lames de liaison au lieu de rétrécissements de section dans les poussoirs 9. On a donc quand même une articulation élastique sans jeu qui donne une flexibilité à chaque structure 7.

Le dispositif selon l'invention comporte de nombreux avantages.

Les moyens permettant la déformation de la structure 7 comportent uniquement des rétrécissements 8 de section. Ils ne comportent pas d'articulations. Par conséquent, il n'y a pas d'usure des pièces ni d'apparition de jeux au fur et à mesure de l'utilisation. On a donc une bonne précision des déplacements, ainsi qu'une durée de vie importante.

Les matériaux actifs 6a et 6b possèdent une forme massive, ce qui permet d'obtenir une grande rigidité de l'ensemble, ainsi qu'un effort important en sortie de tige 3.

Le dispositif d'actionnement de la valve fournit donc une énergie importante pour un faible encombrement du système.

En effet, avantageusement, l'encombrement selon la double flèche 32 est de 50 mm. L'encombrement du dispositif selon la direction normale au plan 30 est également de 50 mm, la partie symétrique à celle représentée sur la figure 2 étant comprise dans ce dimensionnement. Il est encore plus réduit pour le deuxième mode de réalisation.

On comprend grâce à la figure 5 que le dispositif comporte au moins quatre pavés de matériaux actifs. Cette redondance des pavés permet en outre une sécurité en cas de dysfonctionnent d'un pavé de matériau actif. Le système peut encore fonctionner en cas de panne d'un pavé.

Avantageusement, les céramiques des matériaux actifs sont des matériaux multicouches. Ils permettent ainsi l'utilisation d'une tension d'alimentation peu élevée.

## Revendications

1. Dispositif de déplacement d'une pièce (3) mobile selon un axe longitudinal par rapport à un boîtier (2), ledit dispositif étant symétrique par rapport à un plan longitudinal (30) à la pièce mobile (3), comportant deux structures (7) solidaires de ladite pièce mobile (3) et des éléments en matériau actif comportant au moins deux pavés (6a, 6b) s'étendant entre des parois internes de chaque structure (7), les sens d'élongation des pavés étant antisymétriques par rapport à un axe (31) sensiblement perpendiculaire à la direction de déplacement de la pièce mobile (3), les structures étant flexibles et aptes à déplacer la pièce mobile par leur déformation en fonction de l'élongation des pavés, chaque structure (7) comportent une plaque (10) s'étendant sensiblement parallèlement à l'axe de déplacement de la pièce mobile et des poussoirs obliques (9), au moins un couple de poussoirs (9) étant solidaire de la pièce mobile (3) à leur extrémité grâce à au moins un pavé de jonction (13), **caractérisé en ce que** les poussoirs (9) sont géométriquement antisymétriques par rapport à un plan perpendiculaire aux plaques (10).

2. Dispositif selon la revendication 1, **caractérisé en ce que** les poussoirs sont venus de matière sur ladite plaque (10).

3. Dispositif selon la revendication 2, **caractérisé en ce que** chaque structure (7) comporte des rétrécissements (8) de section entre la plaque (10) et les poussoirs obliques (9), ainsi qu'entre les poussoirs obliques et les pavés (13) de jonction avec la pièce mobile (3), ces rétrécissements (8) de section étant aptes à fournir une flexibilité à chaque structure (7).

4. Dispositif selon la revendication 1, **caractérisé en ce que** des poussoirs obliques (9) sont rapportés sur ladite plaque (10), la liaison entre la plaque (10) et les poussoirs (9) et/ou la liaison entre les poussoirs (9) et le pavé de jonction (13) étant une articulation élastique sans jeu formée d'au moins une lame de liaison.

5. Dispositif selon l'une des revendications 1 à 4, **caractérisé en ce qu'**il comporte des moyens (11) aptes à précontraindre les moyens de déplacement entre les plaques (10).

6. Dispositif selon l'une des revendications 1 à 5, **caractérisé en qu'**un pavé de jonction (13a) est relié à la pièce mobile (3) et un autre pavé (13b) de jonction est fixe par rapport au boîtier (2) externe aux structures (7), le pavé fixe (13b) étant solidaire d'une tige (56) venant en butée d'une vis (60) de réglage de la position zéro de déplacement de la pièce mobile (3).

7. Dispositif selon l'une des revendications 1 à 6, **caractérisé en ce qu'**il comporte au moins une membrane (4) de part et d'autre des pavés de jonction (13a, 13b), les membranes (4) étant souples dans la direction de déplacement de la pièce mobile (3) et raides dans la direction transverse.

8. Dispositif selon la revendication 7, **caractérisé en ce que** des membranes sont aptes à assurer une étanchéité entre la pièce mobile (3) et le boîtier (2).

9. Dispositif selon la revendication 8, **caractérisé en ce que** le boîtier (2) est rempli d'un liquide (18) de contre-pression.

10. Dispositif selon l'une des revendications 7 à 9, **caractérisé en ce qu'**au moins une membrane comporte des soufflets (15).

11. Dispositif selon l'une des revendications 7 à 10, **caractérisé en ce qu'**il comporte au moins une chambré de dilatation pour le liquide de remplissage (18).

12. Dispositif selon la revendication 11, **caractérisé en ce que** chaque chambre de dilatation comporte une découpe (17) d'une partie des parois du boîtier (2), cette découpe étant reliée au boîtier (2) par des soufflets (16).

## Claims

1. A device for displacing a moving part (3) along a longitudinal axis relative to a housing (2), said device being symmetrical about a plane (30) extending longitudinally relative to the moving part (3), the device comprising two structures (7) that are secured to said moving part (3) and elements of active material comprising at least two blocks (6a, 6b) extending between inside walls of each structure (7), with the elongation directions of the blocks being antisymmetrical about an axis (31) substantially perpendicular to the displacement axis of the moving part (3), the structures being flexible and suitable for displacing the moving part by deforming as a function of the elongation of the blocks, each structure (7) comprising a plate (10) extending substantially parallel to the displacement axis of the moving part and oblique pushers (9), at least one pair of pushers (9) being secured to the moving part (3) at their ends via at least one junction block (13), the device being **characterized in that** the pushers (9) are geometrically antisymmetrical relative to a plane perpendicular to the plates (10).

2. A device according to claim 1, **characterized in that** each structure (7) comprising a plate (10) extending substantially parallel to the displacement axis of the moving part and oblique pushers (9), the pushers are integral with the plate (10), at least one pair of pushers (9) being secured to the moving part (3) at their ends via at least one junction block (13).

3. A device according to claim 2, **characterized in that** each structure (7) includes portions (8) of narrow section between the plate (10) and the oblique pushers (9), and between the oblique pushers and the junction blocks (13) connected to the moving part (3), these portions (8) of narrow section being suitable for imparting flexibility to each structure (7).

4. A device according to claim 1, **characterized in that** the oblique pushers (9) are fitted to said plate (10), the connection between the plate (1) and the pushers (9) and/or the connection between the pushers (9) and the junction block (13) being a resilient hinge without play constituted by at least one connecting blade.

5. A device according to any one of claims 1 to 4, **characterized in that** it includes means (11) suitable for prestressing the displacement means between the plates (10).

6. A device according to any one of claims 1 to 5, **characterized in that** one junction block (13a) is connected to the moving part (3) and another junction block (13b) is fixed relative to the housing (2) external to the structures (7), the fixed block (13b) being secured to a rod (56) coming into abutment against a screw (60) for adjusting the displacement zero position of the moving part (3).

7. A device according to any one of claims 1 to 6, **characterized in that** it includes at least one diaphragm (4) on either side of the junction blocks (13a, 13b), the diaphragms (4) being flexible along the displacement axis of the moving part (3) and stiff transversely relative thereto.

8. A device according to claim 7, **characterized in that** the diaphragms are suitable for providing sealing between the moving part (3) and the housing (2).

9. A device according to claim 8, **characterized in that** the housing (2) is filled with a counterpressure liquid (18).

10. A device according to any one of claims 7 to 9, **characterized in that** at least one diaphragm includes bellows (15).

11. A device according to any one of claims 7 to 10, **characterized in that** it includes at least one expansion chamber for the filler liquid (18).

12. A device according to claim 11, **characterized in that** each expansion chamber includes a cutout (17) constituting a portion of the wall of the housing (2), said cutout being connected to the housing (2) by bellows (16).

## Patentansprüche

1. Vorrichtung zur Verschiebung eines bewegbaren Teils (3) gemäß einer Längsachse im Verhältnis zu einem Gehäuse (2), wobei die Vorrichtung gemäß einer Längsebene (30) zum bewegbaren Teil (3) symmetrisch ist, zwei Strukturen (7) umfassend, die mit dem bewegbaren Teil (3) verbunden sind und Elemente aus aktivem Material, die mindestens zwei Klötze (6a, 6b) umfassen, die sich zwischen Innenwänden jeder Struktur (7) erstrecken, wobei die Ausschlagrichtung der Klötze im Verhältnis zu einer Achse (31) etwa senkrecht zur Richtung der Verschiebung des bewegbaren Teils (3) antisymmetrisch ist, wobei die Strukturen flexibel sind und imstande, das bewegbare Teil durch ihre Deformation in Abhängigkeit des Ausschlags der Klötze zu verschieben, wobei jede Struktur (7) eine Platte (10) umfasst, die sich etwa parallel zur Achse der Verschiebung des bewegbaren Teils erstreckt und schräge Drücker (9), wobei mindestens ein Drückerpaar (9) mit dem bewegbaren Teil (3) an seinem Ende dank mindestens eines Verbindungsklotzes (13) verbunden ist, **dadurch gekennzeichnet, dass** die Drücker (9) im Verhältnis zu einer Ebene senkrecht zu den Platten (10) geometrisch antisymmetrisch sind.

2. Vorrichtung nach Anspruch 1, **dadurch gekennzeichnet, dass** die Drücker auf der Platte (10) aus einem Stück gearbeitet sind.

3. Vorrichtung nach Anspruch 2, **dadurch gekennzeichnet, dass** jede Struktur (7) Verjüngungen (8) des Querschnitts zwischen der Platte (10) und den schrägen Drückern (9) umfasst sowie zwischen den schrägen Drückern und den Verbindungsklötzen (13) mit dem bewegbaren Teil (3), wobei diese Querschnittsverjüngungen (8) imstande sind, jeder Struktur (7) Flexibilität zu verleihen.

4. Vorrichtung nach Anspruch 1, **dadurch gekennzeichnet, dass** die schrägen Drücker (9) auf der Platte (10) angestückt sind, wobei die Verbindung zwischen der Platte (10) und den Drückern (9) und/oder die Verbindung zwischen den Drückern (9) und dem Verbindungsklotz (13) ein elastisches Gelenk ist ohne Spiel, das von mindestens einer Verbindungslamelle gebildet wird.

5. Vorrichtung nach einem der Ansprüche 1 bis 4, **dadurch gekennzeichnet, dass** sie Mittel (11) umfasst, die imstande sind, die Verschiebemittel zwischen den Platten (10) vorzuspannen.

6. Vorrichtung nach einem der Ansprüche 1 bis 5, **dadurch gekennzeichnet, dass** ein Verbindungsklotz (13a) mit dem bewegbaren Teil (3) verbunden ist und ein anderer Verbindungsklotz (13b) im Verhältnis zum äußeren Gehäuse (2) der Strukturen (7) starr ist, wobei der starre Klotz (13b) mit einer Stange (56) verbunden ist, die gegen eine Schraube (60) zum Einstellen der Nullstellung der Verschiebung des bewegbaren Teils (3) anschlägt.

7. Vorrichtung nach einem der Ansprüche 1 bis 6, **dadurch gekennzeichnet, dass** sie mindestens eine Membran (4) auf der einen und der anderen Seite der Verbindungsklötze (13a, 13b) umfasst, wobei die Membranen (4) in der Richtung der Verschiebung des bewegbaren Teils (3) elastisch sind und unelastisch in der Querrichtung.

8. Vorrichtung nach Anspruch 7, **dadurch gekennzeichnet, dass** Membranen imstande sind, eine Dichtigkeit zwischen dem bewegbaren Teil (3) und dem Gehäuse (2) zu gewährleisten.

9. Vorrichtung nach Anspruch 8, **dadurch gekennzeichnet, dass** das Gehäuse (2) mit einer Gegendruckflüssigkeit (18) gefüllt ist.

10. Vorrichtung nach einem der Ansprüche 7 bis 9, **dadurch gekennzeichnet, dass** mindestens eine Membran Bälge (15) umfasst.

11. Vorrichtung nach einem der Ansprüche 7 bis 10, **dadurch gekennzeichnet, dass** sie mindestens eine Ausdehnungskammer für die Füllflüssigkeit (18) umfasst.

12. Vorrichtung nach Anspruch 11, **dadurch gekennzeichnet, dass** jede Ausdehnungskammer einen Ausschnitt (17) eines Abschnitts der Wände des Gehäuses (2) umfasst, wobei dieser Ausschnitt mit dem Gehäuse (2) durch Bälge (16) verbunden ist.
